# DEMANDE DE BREVET EUROPEEN

(11) **EP 1 128 265 A1**
(43) Date de publication de la demande: **29.08.2001**
(21) Numéro de dépôt: 01400351.1
(22) Date de dépôt: 09.02.2001
(51) Int. Cl.: G06F 9/445

(54) **Système de reprogrammation à distance d'au moins un calculateur d'un système informatique embarqué à bord d'un véhicule automobile**

(30) Priorité: 22.02.2000 FR 0002195
(71) Demandeur: Peugeot Citroen Automobiles SA, 92200 Neuilly sur Seine (FR)
(72) Inventeur: Loubeyre, Yves, 92380 Garches (FR)
(74) Mandataire: Habasque, Etienne Joel Jean-François

(57) **Abrégé**

Ce système de reprogrammation à distance d'au moins un calculateur d'un système informatique embarqué à bord d'un véhicule automobile (1), est caractérisé en ce qu'il comporte des moyens (2) formant centre-serveur dans lequel sont stockées des informations de reprogrammation du calculateur, raccordés par un réseau (4) de communication d'informations à une infrastructure de télécommunication (5) adaptée pour entrer en contact et échanger des informations avec des moyens de télécommunication complémentaires (6) embarqués à bord du véhicule (1) et raccordés à un réseau de transmission d'informations (7) interne au véhicule auquel est raccordé le calculateur pour permettre la reprogrammation à distance de celui-ci.

## Description

La présente invention concerne un système de reprogrammation à distance d'au moins un calculateur d'un système informatique embarqué à bord d'un véhicule automobile.

On assiste depuis plusieurs années à une intégration croissante de calculateurs à bord des véhicules automobiles.

II peut arriver que pour diverses raisons, il soit nécessaire de reprogrammer tout ou partie d'un ou de plusieurs de ces calculateurs.

Cette reprogrammation peut par exemple concerner la correction d'un programme, la correction d'une stratégie de contrôle et de commande d'un organe fonctionnel ou une modification de paramètres d'une fonction.

Cette reprogrammation nécessite alors la reprise du parc de véhicules par une campagne de rappel qui coûte souvent cher aux constructeurs aussi bien en terme d'image de marque qu'en terme financier.

Le but de l'invention est donc de résoudre ces problèmes.

A cet effet, l'invention a pour objet un système de reprogrammation à distance d'au moins un calculateur d'un système informatique embarqué à bord d'un véhicule automobile, caractérisé en ce qu'il comporte des moyens formant centre-serveur dans lequel sont stockées des informations de reprogrammation du calculateur, raccordés par un réseau de communication d'informations à une infrastructure de télécommunication adaptée pour entrer en contact et échanger des informations avec des moyens de télécommunication complémentaires embarqués à bord du véhicule et raccordés à un réseau de transmission d'informations interne au véhicule auquel est raccordé le calculateur pour permettre la reprogrammation à distance de celui-ci.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un tel système de reprogrammation ; et
- la Fig.2 représente un organigramme illustrant le fonctionnement de celui-ci.

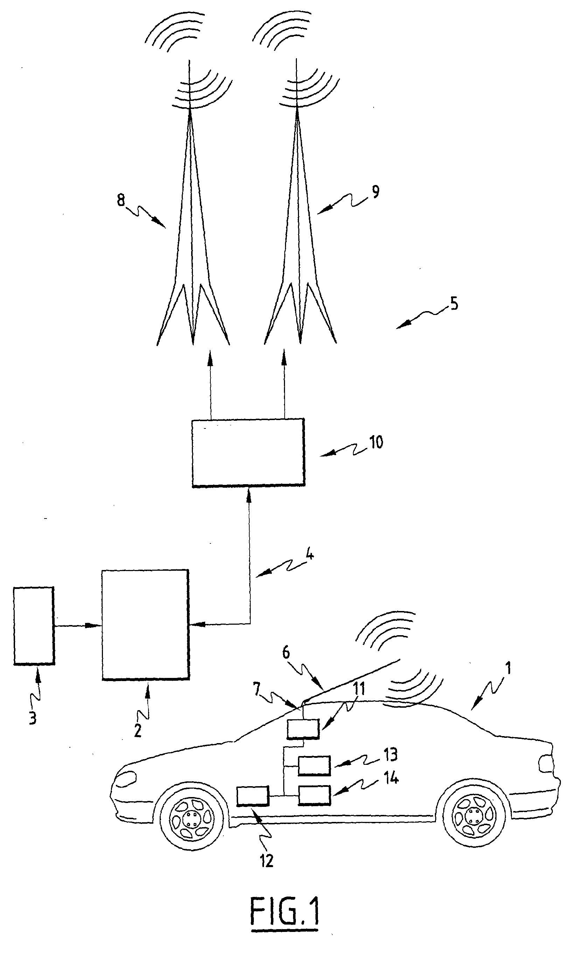

On a en effet représenté sur cette figure 1, un système de reprogrammation à distance d'au moins un calculateur d'un système informatique embarqué à bord d'un véhicule automobile.

Le véhicule automobile est désigné par la référence générale 1 sur cette figure.

Ce système comporte des moyens formant centre-serveur désignés par la référence générale 2, munis de moyens désignés par la référence générale 3 de stockage d'informations de reprogrammation de ce calculateur.

Ces moyens formant centre-serveur sont raccordés par un réseau de communication d'informations désigné par la référence générale 4, à une infrastructure de télécommunication désignée par la référence générale 5, adaptée pour entrer en contact et échanger des informations avec des moyens de télécommunication complémentaires désignés par la référence générale 6, embarqués à bord du véhicule 1 et raccordés à un réseau de transmission d'informations interne au véhicule, désigné par la référence générale 7, auquel est raccordé le calculateur pour permettre la reprogrammation à distance de celui-ci.

L'infrastructure de télécommunication peut comporter par exemple différents pylônes d'émission/réception d'informations tels que les pylônes désignés par les références 8 et 9 sur cette figure, répartis sur un territoire donné pour couvrir celui-ci, ces différents pylônes étant reliés à une base de télécommunication désignée par la référence générale 10.

De nombreux opérateurs mettent en oeuvre ce type d'infrastructures de télécommunication, celles-ci pouvant être utilisées pour entrer en contact et échanger des informations avec un véhicule.

Comme cela a été indiqué précédemment, le véhicule comporte des moyens de télécommunication complémentaires 6 comportant par exemple une antenne adaptée pour échanger des informations avec l'infrastructure de télécommunication, cette antenne étant reliée à un réseau de transmission d'informations interne au véhicule désigné par la référence générale 7.

Ce réseau est alors géré par exemple par un calculateur central 11 du véhicule et est raccordé à différents calculateurs embarqués à bord du véhicule, tels que par exemple les calculateurs désignés par les références 12,13 et 14 sur cette figure.

Ces calculateurs peuvent par exemple comporter le calculateur de contrôle du fonctionnement du moteur du véhicule, le calculateur de contrôle du fonctionnement de la boîte de vitesses, le calculateur de contrôle du fonctionnement des suspensions, le calculateur de contrôle des moyens de freinage, etc...

Le système tel que décrit peut alors être utilisé pour assurer la reprogrammation d'au moins l'un de ces calculateurs.

A cet effet, lors du déclenchement d'une opération de reprogrammation d'un calculateur, le centre-serveur 2 déclenche l'émission d'une requête de mise en contact avec un véhicule déterminé, à destination de l'infrastructure de télécommunication qui recherche alors dans une base de données correspondantes, les coordonnées téléphoniques de ce véhicule afin de permettre l'établissement de la communication avec ce véhicule.

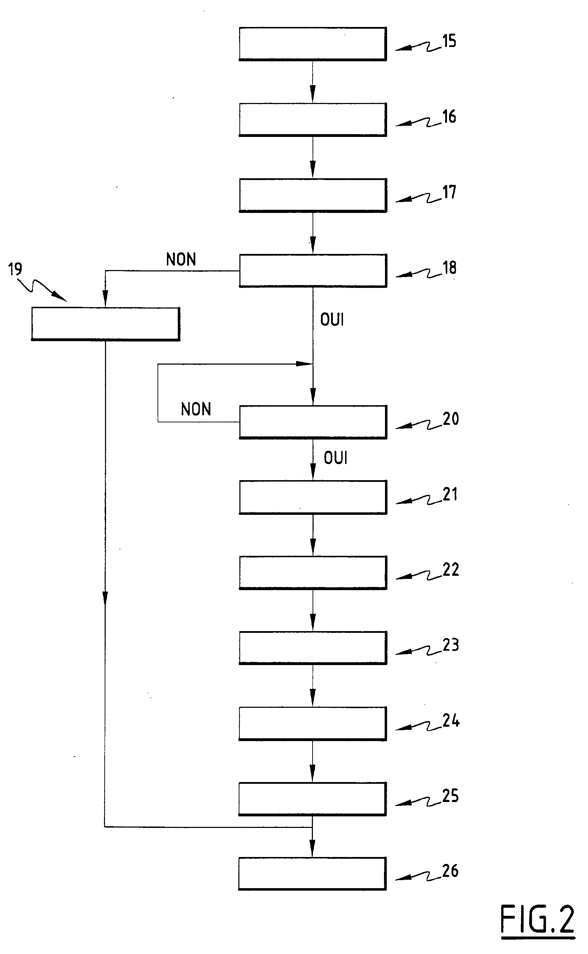

Cette étape est désignée par la référence générale 15 sur la figure 2 et permet d'établir une connexion entre le centre-serveur et le véhicule, en 16.

Au début de cette communication, le calculateur central 11 du véhicule émet à destination du centre-serveur, des informations d'identification du véhicule, telles que par exemple un numéro d'identification de celui-ci et des informations d'identification de sa composition et en particulier de sa composition électronique et informatique.

Cette étape est illustrée en 17 sur la figure 2.

En 18, le centre-serveur émet à destination du véhicule, des informations de déverrouillage du système informatique embarqué à bord du véhicule et en particulier du calculateur central 11 de celui-ci.

Ces informations de déverrouillage sont alors comparées par exemple à des informations prédéterminées stockées dans le calculateur central 11 pour valider ou non le déverrouillage du système.

Si les informations de déverrouillage sont incorrectes, le système reste verrouillé et la procédure de reprogrammation est rejetée, comme cela est illustré en 19 sur cette figure 2.

Par contre, si le déverrouillage est accepté, le calculateur central 11 vérifie si des conditions de sécurité de fonctionnement du véhicule sont remplies comme cela est illustré en 20 sur la figure 2.

Ces conditions peuvent par exemple concerner le fait que le véhicule est à l'arrêt ou non, etc...

Si ces conditions de sécurité sont remplies, le calculateur central 11 assure le blocage des autres calculateurs du véhicule comme cela est illustré en 21 pour inhiber toute intervention possible d'un utilisateur du véhicule afin de ne pas perturber la reprogrammation de ces calculateurs.

Cette étape peut par exemple être associée à la génération d'un signal d'avertissement de l'utilisateur du véhicule lui indiquant qu'une opération de reprogrammation est en cours afin de bien lui faire comprendre ce qui se passe.

Une fois le système informatique embarqué à bord du véhicule bloqué, le calculateur central 11 assure la reprogrammation du ou des calculateurs correspondants lors de l'étape 22 à partir des informations reçues du centre-serveur par l'intermédiaire de l'infrastructure de télécommunication.

Le calculateur central 11 détermine alors le ou les calculateurs à reprogrammer et assure la reprogrammation de ceux-ci à travers le réseau de transmission d'informations interne au véhicule.

Une fois cette reprogrammation effectuée, le calculateur central 11 déclenche en 23 une vérification de la procédure de reprogrammation sur chaque calculateur modifié afin que ces derniers vérifient leur bon chargement.

Enfin, lors de l'étape 24, le calculateur central 11 mémorise un historique des opérations de reprogrammation et émet à destination du centre-serveur un compte rendu de l'opération de reprogrammation afin qu'une trace de cette opération soit conservée au niveau de ce centre-serveur.

Cette émission est illustrée en 25 sur cette figure 2.

La procédure est alors terminée en 26.

Un tel système peut mettre en oeuvre des messages de type Internet émanant par exemple d'un centre-serveur d'une station d'un garage central d'un constructeur correspondant qui émet alors un code de recherche pour identifier un véhicule concerné.

Ce code qui correspond par exemple au numéro d'identification d'un véhicule permet d'identifier la composition électronique de celui-ci, le nombre de calculateurs, le type de systèmes de contrôle présents, l'état des versions, etc..

Si le calculateur central du véhicule reconnaît ce numéro, il accepte la communication et permet ainsi la procédure de reprogrammation.

Deux cas peuvent alors être prévus, selon que le véhicule est activé ou non.

Si le véhicule n'est pas activé, il n'y a aucune modification possible des calculateurs du véhicule, car le système informatique est considéré comme non opérationnel.

Ceci permet d'éviter de remettre à jour des véhicules non utilisés régulièrement.

Par contre, si le véhicule est activé, c'est-à-dire que l'ensemble des calculateurs est sous tension, que ce véhicule soit roulant ou à l'arrêt, le calculateur central de celui-ci peut admettre la requête de modification d'un ou des calculateurs.

A cet effet, le calculateur central doit attendre que le conducteur du véhicule arrête celui-ci et coupe le contact.

Le calculateur central peut alors maintenir l'alimentation du système informatique afin de pouvoir effectuer toutes les modifications nécessaires tout en gardant un maximum de sécurité.

C'est ainsi que ces modifications sont effectuées lorsque le conducteur n'utilise pas le véhicule.

Comme cela a été indiqué précédemment, l'ensemble des calculateurs du véhicule est relié par l'intermédiaire d'un réseau interne au véhicule, ce qui permet d'assurer la transmission des informations.

L'opération de reprogrammation n'est bien entendu autorisée qu'à partir du moment où le système informatique a été déverrouillé par l'utilisation d'un mot de passe correct.

Dans le cas où l'ensemble des modifications n'est pas terminé alors que le conducteur rentre à nouveau dans son véhicule, il peut être nécessaire de faire apparaître au niveau du tableau de bord, un avertissement indiquant que le véhicule est momentanément indisponible et en inhibant toute action par exemple sur la clé de contact du véhicule.

Le conducteur comprend alors qu'une mise à jour automatique des calculateurs de son véhicule est en train d'être effectuée.

Une fois les modifications effectuées, le calculateur central lance un contrôle automatique de ces calculateurs afin de s'assurer du bon fonctionnement de cette opération de reprogrammation.

Le calculateur central stocke également, par exemple par écriture en Flash EPROM, l'ensemble des opérations de reprogrammation avec leur date, le type de modification, etc..., puis coupe automatiquement l'alimentation des calculateurs.

Lorsque le conducteur du véhicule reprend son véhicule, il voit par exemple par une indication au tableau de bord qu'une mise à jour a été effectuée.

Il peut alors soit passer chez un garagiste pour connaître l'ensemble des problèmes résolus, soit interroger directement le centre-serveur et voir afficher sur un site Internet par exemple, l'ensemble des modifications.

Le réseau du constructeur conserve également en mémoire toutes les opérations effectuées sur le véhicule.

L'utilisation de numéros d'identification des véhicules permet également à un constructeur de connaître l'ensemble du parc de véhicules concernés.

En cas de panne ou d'accident, un réparateur quelconque peut également interroger le véhicule pour connaître son identification et donc sa composition et adapter les interventions de dépannage en fonction de celui-ci.

Le calculateur central peut d'ailleurs détecter une anomalie ou un dysfonctionnement du véhicule et émettre à destination du centre-serveur du constructeur, un message correspondant afin que celui-ci ait un historique des pannes et puisse intervenir plus efficacement dans la recherche d'un problème ou l'explication d'un dysfonctionnement.

Bien entendu, les opérations de reprogrammation des calculateurs peuvent se faire soit systématiquement, soit à la requête d'un client, par exemple dans le cadre d'un contrat de maintenance préventive.

Un tel système permet également une communication entre par exemple un garagiste et un véhicule pour permettre un diagnostic de l'ensemble du fonctionnement du système informatique du véhicule sans intervention humaine sur le véhicule.

Le calculateur central transmet alors les requêtes de diagnostic à l'ensemble des calculateurs du véhicule et émet des informations de diagnostic pour analyse par le garagiste.

Toutes les opérations classiques de diagnostic faites aujourd'hui par les systèmes de test en garage, peuvent alors être faites sur ce même principe, ce qui permet d'éviter non seulement le développement de nouveaux moyens de diagnostic, mais également des interventions humaines sur les véhicules.

Une telle opération peut par exemple être réalisée par un spécialiste de tel ou tel calculateur qui peut alors l'interroger à distance, afin d'aider à la recherche d'une panne.

On notera également que les moyens formant centre-serveur dans lesquels sont stockées des informations de reprogrammation peuvent être raccordés à l'infrastructure de télécommunication par un réseau de communication à liaison filaire, à satellite, etc...

Bien entendu, d'autres modes de réalisation encore d'un tel système peuvent être envisagés.

## Revendications

1. Système de reprogrammation à distance d'au moins un calculateur d'un système informatique embarqué à bord d'un véhicule automobile (1), caractérisé en ce qu'il comporte des moyens (2) formant centre-serveur dans lequel sont stockées des informations de reprogrammation du calculateur, raccordés par un réseau (4) de communication d'informations à une infrastructure de télécommunication (5) adaptée pour entrer en contact et échanger des informations avec des moyens de télécommunication complémentaires (6) embarqués à bord du véhicule (1) et raccordés à un réseau de transmission d'informations (7) interne au véhicule auquel est raccordé le calculateur pour permettre la reprogrammation à distance de celui-ci.

2. Système selon la revendication 1, caractérisé en ce que le système informatique du véhicule comporte un calculateur central (11) de gestion du fonctionnement de celui-ci.

3. Système selon la revendication 1 ou 2, caractérisé en ce que lors du lancement d'une opération de reprogrammation par le centre-serveur, l'infrastructure de télécommunication (5) est adaptée pour rechercher les coordonnées téléphoniques du véhicule dans une base de données afin d'entrer en communication avec celui-ci (en 15 et 16) de manière à permettre un échange d'informations d'identification entre le centre-serveur et le véhicule (en 17) pour déverrouiller ou non (en 18) le système informatique et en ce qu'en cas de déverrouillage du système, le calculateur central (11) est adapté pour vérifier (en 20) des conditions de sécurité liées au fonctionnement du véhicule, bloquer (en 21) les calculateurs du système, assurer (en 22) la reprogrammation du ou des calculateurs correspondants, déclencher (en 23) une opération de vérification de la procédure de reprogrammation et assurer (en 24), une mémorisation de cette opération et l'émission à destination du centre-serveur d'un compte rendu de cette opération de reprogrammation avant d'autoriser à nouveau l'utilisation du véhicule.

4. Système selon la revendication 3, caractérisé en ce que le calculateur central (11) et le centre-serveur (2) comprennent des moyens de diagnostic du fonctionnement du système informatique du véhicule.

5. Système selon l'une quelconque des revendications précédentes, caractérisé en ce que les moyens (2) formant centre-serveur sont raccordés à l'infrastructure de télécommunication (5) par un réseau de communication filaire.

6. Système selon l'une quelconque des revendications précédentes, caractérisé en ce que les moyens (2) formant centre-serveur sont raccordés à l'infrastructure de télécommunication (5) par un réseau de communication à satellite.
